(19) Europäisches Patentamt
European Patent Office
Office européen des brevets

(11) Veröffentlichungsnummer: **0 501 144 B1**

(12) **EUROPÄISCHE PATENTSCHRIFT**

(45) Veröffentlichungstag der Patentschrift: **24.05.95**

(51) Int. Cl.⁶: **D21D 5/26**, B01D 19/00

(21) Anmeldenummer: **92101147.4**

(22) Anmeldetag: **24.01.92**

(54) **Vorrichtung zur Entlüftung einer Papierstoffsuspension und ihre Verwendung.**

(30) Priorität: **27.02.91 DE 4106140**

(43) Veröffentlichungstag der Anmeldung:
**02.09.92 Patentblatt 92/36**

(45) Bekanntmachung des Hinweises auf die Patenterteilung:
**24.05.95 Patentblatt 95/21**

(84) Benannte Vertragsstaaten:
**DE FR SE**

(56) Entgegenhaltungen:
**DE-A- 1 036 030**
**DE-A- 3 414 770**
**GB-A- 2 082 470**
**US-A- 3 720 315**

(73) Patentinhaber: **Voith Sulzer Stoffaufbereitung GmbH**
**Postfach 2120**
**D-88191 Ravensburg (DE)**

(72) Erfinder: **Bubik, Alfred, Dr.**
**Berliner Strasse 13**
**W-7980 Ravensburg (DE)**
Erfinder: **Gmeiner, Anton**
**Birkenstrasse 56**
**W-7980 Ravensburg-Sickenried (DE)**
Erfinder: **Stein, Walter**
**David Mieserstrasse 54**
**W-7980 Ravensburg (DE)**

**Beschreibung**

Die Erfindung bezieht sich auf eine Vorrichtung zur Entlüftung einer Papierstoffsuspension der in dem Oberbegriff des Patentanspruchs 1 angegebenen Art.

Eine Entlüftung der Stoffsuspension unter Unterdruck, insbesondere bei annäherndem Siedezustand, ist notwendig bei schnelllaufenden Papiermaschinen, an denen Papiersorten wie z.B. für Zeitungsdruck, LWC, Streichdruck, Telex u.ä. aus Suspensionen mit Rohstoffen, wie z.B. Holzschliff, deinktem, sortierten Altpapier oder Zellstoff hergestellt werden. In der Regel wird die Entlüftung nach vorangehender Abscheidung von Störstoffpartikeln durchgeführt.

Zu der Entlüftung werden Vorrichtungen eingesetzt, die dem Fachmann unter Marken-Bezeichnungen, wie z.B. "Deculator", "Ensovac", "Cleanvac" oder Perivac" bekannt sind. Bei diesen bekannten Systemen wird der nach einer Vorreinigung üblicherweise aus einer sogenannten Cleaner-Batterie erhaltene Gutstoff gegen eine, einen unter hohem Unterdruck stehenden Raum abgrenzende Wandung eingespritzt, wodurch eine Versprühung der Suspension erwirkt wird, so daß die Luft aus der Suspension schnell entweichen kann. Der zur Verfügung stehende Raum muß dabei recht groß sein, was aufwendige unter Unterdruck stehende Behälter zur Folge hat.

So beschreibt z. B. die DE-A-1 036 030 einen derartigen Entlüftungsapparat, in den die Suspension über durch einen Verteiler einzeln beschickte Zerstäuberdüsen eingeleitet wird. Der Aufwand für Apparatur und Betrieb ist beträchtlich.

Es soll erreicht werden, diese Entlüftungstechnik auf effizientere Weise zu gestalten, so daß Einsparungen bei den Abmessungen der Apparate und der vorgesehenen Anlage und dadurch Ersparnisse am Raumbedarf gegenüber dem bisherigen Zustand erreicht werden können.

Diese Aufgabe ist bei Entlüftung einer Suspension der anfangs beschriebenen Art erfindungsgemäß durch Maßnahmen, die im kennzeichnenden Teil des Patentanspruchs 1 angegeben sind, gelöst.

Dadurch ist es möglich, eine feinste Versprühung der Suspension in dem bezüglichen Raum zu erwirken, wodurch eine maximale Flüssigkeitsoberfläche geschaffen wird, die bei entsprechendem Vakuum, d.h. bei annäherndem Siedzustand der Flüssigkeit die gewünschte, optimale Entlüftung der Suspension erreichbar macht. Dadurch ist es möglich, den unter dem Vakuum stehenden Raum im Vergleich zum bisher Üblichen zu verkleinern, was schon an sich eine Verringerung des Platzbedarfs bedeutet und damit zur Baukostensenkung beitragt.

In den Unteransprüchen werden vorteilhafte Ausführungsbeispiele der Erfindung dargestellt. Ein besonderes Augenmerk ist auf die Gestaltung des einzelnen Strahles zu richten, insbesondere was die Erzeugung seiner möglichst intensiven Turbulenz betrifft. Dies wird besonders gut dadurch gelöst, daß die Aufteilung in die Teilstrahlen durch einen Verteiler vorgenommen wird, die zu diesem Zweck mit allmählich oder stufendiffusor-artigen, sich verengenden Öffnungen durchsetzt ist. Es sind aber auch sich stufendiffusor-artig erweiternde Öffnungen denkbar, da unter bestimmten Bedingungen auch dadurch die Strahlturbulenz gesteigert wird. Weitere Möglichkeiten zur Ausführung der Erfindung bestehen in der Gestaltung der Bohrungsoberfläche, wie etwa Querrillen oder Rillen, die eine schraubenlinienförmige Flüssigkeitsbewegung erzeugen.

Es ist auch vorteilhafterweise möglich, die Vorreinigung der zu entlüftenden Suspension - insbesondere in Cleanern - von der eigentlichen Entlüftung apparatemäßig und räumlich voneinander zu trennen, so daß die beiden Vorgänge voneinander unabhängig besser optimierbar sind.

Der Gegenstand der Erfindung wird im weiteren näher beschrieben und erklärt. Die Beschreibung bezieht sich auf Zeichnungen,die folgendes darstellen:

Figur 1

ein Schema zur Erläuterung der erfindungsgemäßen Entlüftungsverfahrens

Figur 1A

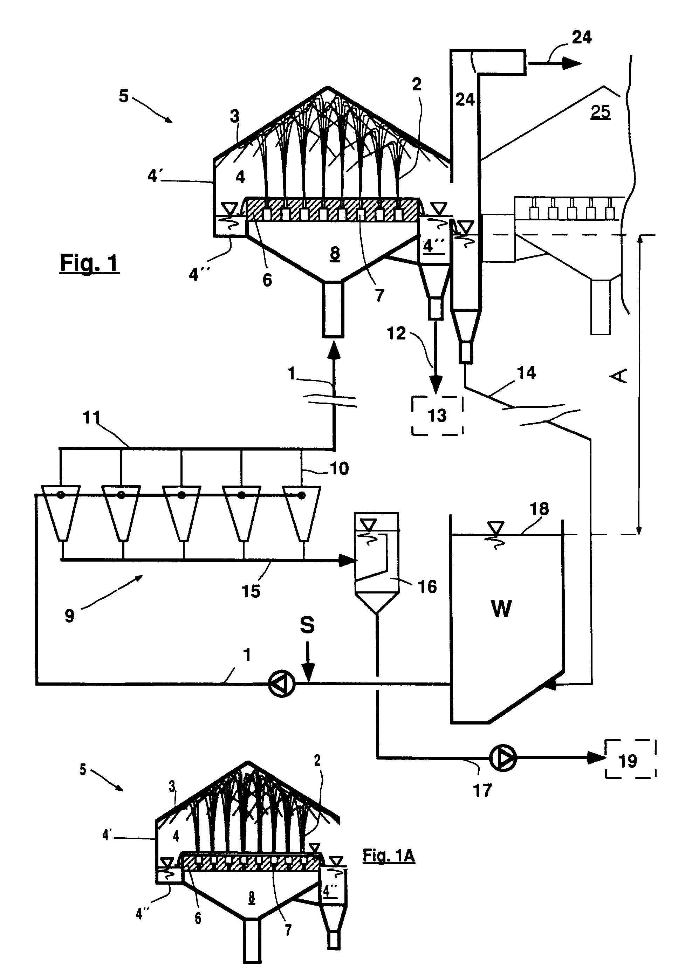

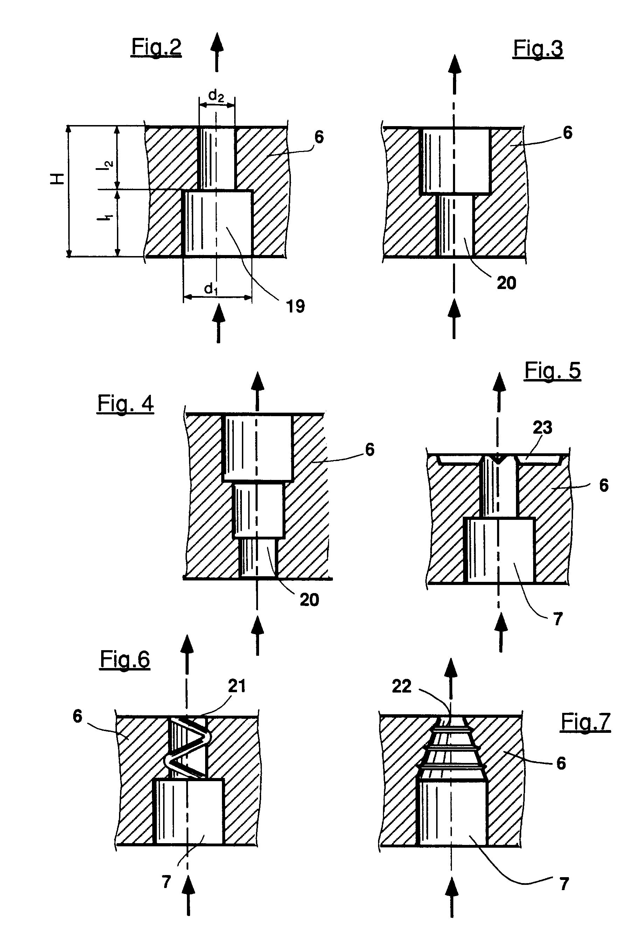

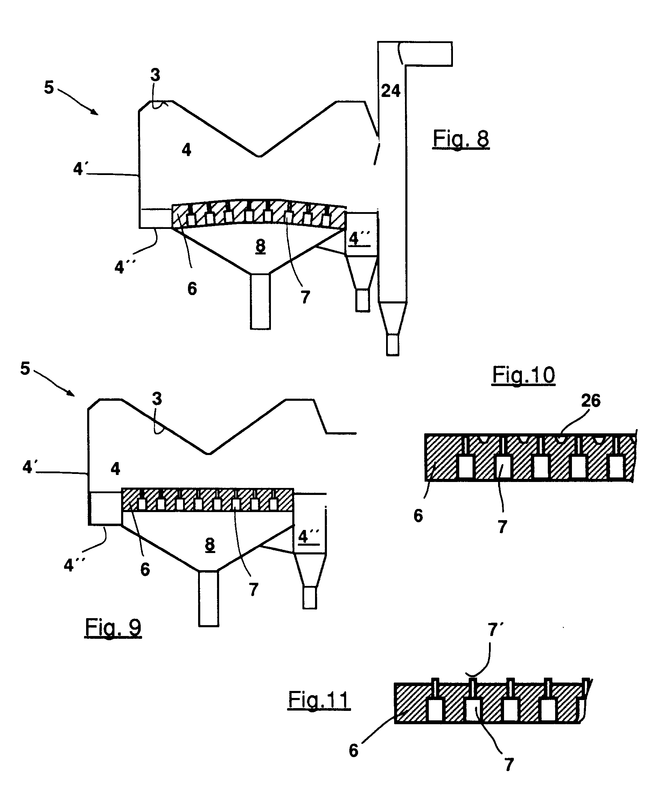

Ausschnitt aus Fig. 1 mit geändertem Verteiler

Figur 2 bis 7

verschiedene vorteilhafte Ausführungsformen der zur Enlüftung verwendbaren Öffnungen, im Schnitt dargestellt

Figur 8 und 9

Entlüftervarianten, schematisch

Figur 10 und 11

spezielle Ausführungen des Verteilers (im Schnitt)

Wie im Beispiel der Fig. 1 dargestellt, kommt die zu entlüftende Suspension 1, welche gebildet wird aus dem Stoff **S** und dem Wasser **W**, getrieben von einer Motorpumpe, zu einer Vorreinigung, bei der die Störstoffe abgetrennt werden. Dies geschieht hier in einer bekannten Cleaner-Anlage 9, aus welcher als Gutstoff die gereinigte Suspension 10 mit einem Druck von ca. 1,4 bis 1,8 bar (abs.) austritt. Durch eine Leitung 11 fließt die Suspension dem Entlüfter 5 zu, und zwar dort in einen Raum 8, der unterhalb eines Verteilers 6 angeordnet ist.

Der Verteiler 6 begrenzt den Raum 8 und ist mit Öffnungen 7 in entsprechender Anzahl durchsetzt. Die Ausführung der Öffnungen 7 gestaltet die gewünschten Eigenschaften der Teilstrahlen 2, was ihre Anzahl, Volumen, Geschwindigkeit und Turbulenz betrifft. Mit Vorteil, um hohe Turbulenzen des Strahles zu erwirken, hat die Bohrung 7 die Form eines sich stufenweise verengenden Diffusors. Dadurch kann an den Stufen ein Teil der Druckenergie in Turbulenz umgewandelt werden.

Es sind aber auch andere Formen der Turbulenzerhöhung möglich, wie später noch gezeigt werden wird.

Durch die räumliche Zuordnung der Anlagenteile wird dafür gesorgt, daß das Maß "A" zwischen dem Niveau des Siebwassers und dem des Wasserspiegels am Überlauf des Entlüfters 5 zwischen 9 Meter und 12 Meter beträgt.

In dem Raum 4 stellt sich bei dieser Anordnung und Gestaltung der Öffnungen ein absoluter Druck von ca. 0,5 bis 0,8 bar ein, was eine Strahlgeschwindigkeit des Teilstrahles 2 von 10 bis 12 m/sec erwirkt, und zwar bei einem Durchflußvolumen von ca. 50 - 80 l/min. pro Teilstrahl 2. Die turbulenten Teilstrahlen 2 sind gegen eine Prallwand 3 gerichtet, wo sie restlos versprühen. Damit wird die Luft 24 von der Flüssigkeit auf effiziente Weise freigelegt und kann aus dem mit der Prallwand 3 begrenzten, geschlossenen Raum 4 abgezogen werden. Dies geschieht bei einem Unterdruck von ca. 0,05 bar in dem Raum 4, bei dem sich die zu entlüftende Suspension annähernd im Siedezustand befindet und zu einem Zustand mit maximaler Oberfläche versprüht wurde.

Als Beispiel sei ein Strahldurchmesser von 80 mm mit dem von 12 mm verglichen: Bei der erfindungsgemäßen Aufteilung des Suspensionsstromes in viele Teilstrahlen von beispielsweise 80 l/min anstatt wie bisher bekannt in die durch den Cleanerdurchsatz vorgegebene Menge von beispielsweise 1000 l/min pro Strahl ergibt sich dann eine Vergrößerung der längenbezogenen Strahloberfläche um den Faktor von ca. 2,5.

Die entlüftete Suspension 12 wird hier noch einer Sortierung 13 unterzogen. Erst der Gutstoff dieser Sortierung wird der Papiermaschine zugeführt. Ein ständiger kleiner Überschuß 14 der entlüfteten Suspension wird dem Strom der zu entlüftenden Suspension 1 beigemischt.

Ein Überlauf (Reject) 15 der Cleaner-Anlage 9 wird einer Grobentlüftung 16 unterzogen. Der Gutstoff 17 dieser Grobentlüftung wird mit dem in der Papiermaschine anfallenden Siebwasser vermischt, und diese Suspension z.B. über eine zweite Cleanerstufe 19 geführt, gegebenenfalls in einer zugekoppelten zweiten Entlüftungsstufe 25 entlüftet und in der Papiermaschine weiterverarbeitet.

Fig. 1A erläutert ein Variante, bei der im Verteiler 6 die Einzelstrahlen 2 aus sich in Strömungsrichtung erweiternden Stufendiffusoren austreten. Dabei wird die Suspension auf dem Verteiler 6 angestaut, so daß dieser mit Flüssigkeit bedeckt ist. So kann der Stufendiffusor zur Turbulenzerzeugung besonders wirksam werden.

Die Figuren 2 bis 6 zeigen Schnitte des Verteilers 6, in denen die Öffnungen 7 als Stufendiffusoren (19,20) ausgebildet sind, die sich in Strömungsrichtung (Pfeil) verengen oder in Sonderfällen (Fig.3 und 4) auch erweitern können. Es sind ein oder mehre Stufensprünge innerhalb des Diffusors denkbar.

Beispielsweise sind sich verengende Diffusoren so dimensioniert, daß sich folgende Verhältnisse ergeben:

$$d_2 = (5 \text{ bis } 15) \text{ mm} \qquad d_1 = d_2 + (2 \text{ bis } 30) \text{ mm}$$
$$l_1 = (2 \text{ bis } 6) \, d_1 \qquad l_2 = (2 \text{ bis } 6) \, d_2$$
$$H = l_1 + l_2$$

Dabei sind "d" Innendurchmesser und "H" Gesamtlänge der Diffusoren, wobei sich die Gesamtlänge aus den Teillängen "l" zusammensetzt.

Fig.5 zeigt die Möglichkeit, durch an der Austrittsseite der Öffnungen 7 in die Verteileroberfläche angebrachte Nuten die Turbulenz des dort austretenden Suspensionsstrahles zu erhöhen.

Nach Fig.6 bewirken eingefräste schraubenförmig orientierte Rillen 21 im Inneren der Öffnung 7 ein Aufreißen der Einzelstrahlen nach dem Austreten. Ebenfalls turbulenzerhöhende Wirkung haben die Querrillen 22, in Fig. 7 dargestellt, wobei hier gleichzeitig ein Variante der nicht stufenförmigen sondern stetigen Querschnittsveränderung der Öffnung 7 sichtbar wird.

Der in Fig. 8 skizzierte Entlüfter 5 weist eine als Verteiler 6 dienende Platte mit Gefälle zu den Sammelrinnen 7 hin auf, was ein schnelles Abfließen der aus dem Raum 4 zurückfließenden Suspension bewirken soll. Die schädliche Ansammlung von Suspension oberhalb des Verteilers 6 läßt sich auch durch offene Kanäle 26, die die Suspension ableiten können, verhindern (Fig.10). Ferner kann, wie in Fig. 11 gezeigt, das Vorstehen der Öffnungen 7 aus dem Verteiler 6 in Form von Verlängerungen 7' einen unghinderten Austriit der hier nicht gezeichneten Teilstrahlen verbesern.

Als weitere Maßnahme zur Verbesserung des Abfließens aus dem Bereich der Aufprallwand 3 kann die in Fig. 8 und 9 dargestellte Form einer in der Mitte tieferen Aufprallwand als weiter außen von Vorteil sein, so daß eine gewünschte Strömungsleitwirkung erzeugt wird.

Es versteht sich, daß auch andere, hier nicht gezeigte Kombinationen der vorgeschlagenen Maßnahmen denkbar sind.

Das vorgeschlagene Entlüftungsverfahren und die dazu verwendete Anlage kann mit Vorteil zusätzlich auch zum Entlüften von anfallendem Rückbzw. Siebwasser benutzt werden, welches, entlüftet, dann z.B. zur Sedimentation von Fasern, Feststoffen und Schlamm z.B. in Sedimentationstrichtern eingesetzt wird.

**Patentansprüche**

1. Entlüftungsapparat (5) zur Entlüftung einer Papierstoffsuspension (1), bei dem das Richten von Teilstrahlen (2) der Suspension gegen eine Aufprallwand (3) in einem unter Unterdruck stehenden Raum (4) eine Versprühung der Suspension bewirkt, wobei die dabei abgesonderte Luft (24) aus dem Raum (4) herausgesaugt wird, mit einem den Raum (4) begrenzenden Behälter (4'), in den die zu entlüftende Suspension (1) durch in einem Verteiler befindliche, die Turbulenz an der Oberfläche der Teilstrahlen ehöhende Maßnahmen aufweisende Öffnungen (7) einleitbar ist, wobei sich in dem Verteiler (6) ein Raum (4) für die zu entlüftende Suspension (1) befindet und wobei entlüftete Suspension (12) durch eine Leitung und abgeschiedene Luft (24) durch eine andere Leitung aus dem Entlüftungsapparat (5) abgeleitet werden können,
   **dadurch gekennzeichnet,**
   daß der gesamte Suspensionsstrom (1) durch den Verteiler (6) in kleine Teilstrahlen (2) aufgeteilt wird und daß als Verteiler (6) eine in den Entlüftungsapparat (5) eingesetzte Platte dient, die die Öffnungen (7) zur Bildung der Teilstrahlen (2) enthält, mit einem Volumenstrom von jeweils maximal 100 l/min, sowie daß eine Sammelrinne (4'') zur Aufnahme und Ableitung der entlüfteten Suspension (12) neben und bezüglich der Höhe unterhalb der Platte vorhanden ist.

2. Entlüftungsapparat (5) nach Anspruch 1, **dadurch gekennzeichnet,** daß die Öffnungen (7) Abschnitte mit sich in Stromrichtung verengenden Querschnitten aufweisen.

3. Entlüftungsapparat (5) nach Anspruch 1, **dadurch gekennzeichnet,** daß die Öffnungen (7) jeweils die Form eines Stufendiffusors haben, indem sie in Stromrichtung mindestens einen stufenartig sich verengenden Durchmesser aufweisen.

4. Entlüftungsapparat (5) nach Anspruch 1, **dadurch gekennzeichnet,** daß die Öffnungen (7) jeweils die Form eines Stufendiffusors haben, indem sie in Stromrichtung mindestens einen stufenartig sich erweiternden Durchmesser aufweisen.

5. Entlüftungsapparat (5) nach Anspruch 1, **dadurch gekennzeichnet,** daß die Turbulenz dadurch verstärkt wird, daß die Öffnungen (7) als an sich bekannte sogenannte Turbulenzdüsen ausgebildet sind.

6. Entlüftungsapparat (5) nach Anspruch 1, **dadurch gekennzeichnet**, daß die Turbulenz dadurch verstärkt wird, daß die Öffnungen (7) an ihren Oberflächen rillenförmige Vertiefungen (21,22) mit einer quer zur Stromrichtung liegenden Richtungskomponente aufweisen.

7. Entlüftungsapparat (5) nach Anspruch 6, **dadurch gekennzeichnet,** daß die Vertiefungen (21) in der vorbeifließenden Suspension einen schraubenlinienförmigen Drall erzeugen.

8. Entlüftungsapparat (5) nach Anspruch 1, **dadurch gekennzeichnet,** daß die Turbulenz dadurch verstärkt wird, daß an den Mündungen der Öffnungen (7) in den Verteiler (6) eingearbeitete Nuten vorhanden sind.

9. Entlüftungsapparat (5) nach Anspruch 1, **dadurch gekennzeichnet,** daß die mit den Einzelstrahlen auf die Aufprallwand (3) aufgetroffene Suspension unter Ausnutzung der ihr innewohnenden kinetischen Energie schnell aus diesem Bereicl weggeführt wird.

10. Entlüftungsapparat (5) nach Anspruch 1, **dadurch gekennzeichnet,** daß die Strahlgeschwindigkeit 10 bis 12 m/s beträgt und der Teilstrahl(2) bei einem absoluten Druck von 0,5 bis 0,8 bar einen Volumenstrom von 50 l/min bis 80 l/min hat.

11. Entlüftungsapparat (5) nach Anspruch 1**, dadurch gekennzeichnet,** daß die Oberseite der als Verteiler (6) dienenden Platte Rillen oder offene Kanäle (26) zur schnellen Ableitung der Suspension in die Sammmelrinne (4'') aufweist.

12. Entlüftungsapparat (5) nach Anspruch 1, **dadurch gekennzeichnet,** daß die Öffnungen (7) in Verlängerungen (7') über die Oberseite der als Verteiler (6) dienenden Platte hinaus münden.

13. Entlüftungsapparat (5) nach Anspruch 1, **dadurch gekennzeichnet,** daß die Oberseite der als Verteiler (6) dienenden Platte Gefälle in Richtung zur Sammmelrinne (4'') aufweist.

14. Entlüftungsapparat (5) nach Anspruch 1 und 9, **dadurch gekennzeichnet,** daß die Aufprallwand (3) des Behälters (4') so geformt und geneigt ist, daß sie dadurch die aufprallende Suspension in Richtung zu der Sammelrinne (4'') führt.

15. Verwendung des Entlüftungsapparats (5) nach Anspruch 1, **dadurch gekennzeichnet,** daß eine Abtrennung der Störstoffpartikel aus der Suspension in einer Cleaner-Anlage (9) geschieht, von der der Gutstoff (10) über eine Gutstoffleitung (11) zu der Entlüftung geführt wird.

16. Verwendung des Entlüftungsapparats (5) nach Anspruch 15, **dadurch gekennzeichnet,** daß der Gutstoff (10) mit einem Druck von 1,4 bis 1,8 bar die Cleaner-Anlage (9) verläßt und unter diesem Druck durch die Gutstoffleitung (11) in den Raum (8) unter dem Verteiler (6) fließt, in welchem ein Druck von 0,5 bis 0,8 bar eingestellt ist, wobei in dem Raum (4) oberhalb des Verteilers (6) ein Vakuum von ca. 0,05 bar gehalten wird.

17. Verwendung des Entlüftungsapparats (5) nach einem der vorstehenden Ansprüche, **dadurch gekennzeichnet,** daß das Niveau des Wasserspiegels im Entlüfter (5) mindestens 9 m, maximal 12 m oberhalb des Niveaus eines Siebwasserbehälters (18) liegt, in dem das an der Papiermaschine anfallende Siebwasser gesammelt wird.

18. Verwendung des Entlüftungsapparats (5) nach einem der vorstehenden Ansprüche, **dadurch gekennzeichnet,** daß ein eventueller Überschuß (14) der entlüfteten Suspension dem Strom der zu entlüftenden Suspension (1) wieder zugemischt wird.

19. Verwendung des Entlüftungsapparats (5) nach Anspruch 15, **dadurch gekennzeichnet,** daß der Überlauf (15) der Cleaner-Anlage (9) einer Grobentlüftung (16) unterzogen wird, und daß das Produkt (17) nach dieser Grobentlüftung (16) mit Siebwasser vermischt, einer zweiten Cleanerstufe (19) zugeführt, dort gereinigt wird und zur weiteren Verwendung gelangt.

20. Verwendung des Entlüftungsapparats (5) nach nach Anspruch 19, **dadurch gekennzeichnet,** daß der Gutstoff aus der zweiten Cleanerstufe (19) vor die erste Cleanerstufe (9) zurückgeführt wird.

21. Verwendung des Entlüftungsapparats (5) nach Anspruch 19, **dadurch gekennzeichnet,** daß das mit Siebwasser vermischte Produkt einer zweiten Entlüftungsstufe (25), welche mit dem Raum (4) gekoppelt ist, zugeführt, dort entlüftet und zur Papiermaschine geleitet wird.

22. Verwendung des Entlüftungsapparats (5) nach einem der vorstehenden Ansprüche, **gekennzeichnet durch** Anwendung zum Entlüften von bei der Papiermaschine anfallendem Rück- bzw. Siebwasser und Benutzung der so entlüfteten Suspension zur Sedimentation von Fasern, Feststoffen und Schlamm in Sedimentationstrichtern.

**Claims**

1. A deairing apparatus (5) for deairing a paper pulp suspension (1), in which directing partial jets (2) of the suspension against an impingement wall (3) in a space (4) maintained under reduced pressure causes atomisation of the suspension, wherein the air (24) which is thereby separated is removed by suction from the space (4), the apparatus having a vessel (4') delimiting the space (4), into which vessel the suspension (1) to be deaired can be introduced through openings (7) located in a distributor and having means for increasing the turbulence at the surface of the partial jets, wherein a space (4) for the suspension (1) to be deaired is situated in the distributor (6) and wherein deaired suspension (12) can be led off from the deairing apparatus (5) through a line and separated air (24) can be led off through another line, characterised in that
the entire flow of suspension (1) is partitioned by the distributor (6) into small partial jets (2) and that a plate inserted in the deairing apparatus (5) serves as the distributor (6), which plate contains the openings (7) for forming the partial jets (2), with a maximum volumetric flow of 100 l/min in each case, and that a collecting channel (4'') for receiving and leading off the deaired suspension (12) is present close to and downstream of the plate with regard to height.

2. A deairing apparatus (5) according to claim 1, characterised in that the openings (7) have sections with cross-sections which narrow in the direction of flow.

3. A deairing apparatus (5) according to claim 1, characterised in that the openings (7) each have the form of a step diffuser in that they have at least one diameter which narrows stepwise in the direction of flow.

4. A deairing apparatus (5) according to claim 1, characterised in that the openings (7) each have the form of a step diffuser in that they have at least one diameter which widens stepwise in the direction of flow.

5. A deairing apparatus (5) according to claim 1, characterised in that the turbulence is increased in that the openings (7) are formed as so-called turbulence nozzles known in the art.

6. A deairing apparatus (5) according to claim 1, characterised in that the turbulence is increased in that at their surfaces the openings (7) have channel-shaped indentations (21, 22) having a directional component situated transverse to the direction of flow.

7. A deairing apparatus (5) according to claim 6, characterised in that the indentations (21) generate a helical swirl in the suspension flowing past.

8. A deairing apparatus (5) according to claim 1, characterised in that the turbulence is increased in that slots are present which are incorporated in the distributor (6) at the mouths of the openings (7) in the distributor (6).

9. A deairing apparatus (5) according to claim 1, characterised in that the suspension which impinges on the impingement wall (3) with its individual jets is rapidly led away from this region by utilising its inherent kinetic energy.

10. A deairing apparatus (5) according to claim 1, characterised in that the jet velocity is 10 to 12 m/s and the partial jet (2) has a volumetric flow rate of 50 l/min to 80 l/min at all absolute pressure of 0.5 to 0.8 bar.

11. A deairing apparatus (5) according to claim 1, characterised in that the upper face of the plate serving as the distributor (6) has grooves or open channels (26) for rapidly leading off the suspension into the collecting channel (4'').

12. A deairing apparatus (5) according to claim 1, characterised in that the openings (7) lead out into extensions (7') above the upper face of the plate serving as the distributor (6).

13. A deairing apparatus (5) according to claim 1, characterised in that the upper face of the plate serving as the distributor (6) has descents running towards the collecting channel (4'').

14. A deairing apparatus (5) according to claims 1 and 9, characterised in that the impingement wall (3) of the vessel (4') is shaped and inclined so that it thereby guides the impinging suspension towards the collecting channel (4'').

15. A use of the deairing apparatus (5) according to claim 1, characterised in that separation of contaminant particles from the suspension is effected in a cleaner installation (9), from which the accepts (10) are conveyed via an accepts line (11) to the deairing stage.

16. A use of the deairing apparatus (5) according to claim 15, characterised in that the accepts (10) leave the cleaner installation (9) at a pressure of 1.4 to 1.8 bar and flow at this pressure through the accepts line (11) into the space (8) under the distributor (6) in which a pressure of 0.5 to 0.8 bar is maintained, wherein a vacuum of about 0.05 bar is maintained in the space (4) above the distributor (6).

17. A use of the deairing apparatus (5) according to any one of the preceding claims, characterised in that the level of the water surface in the deairer (5) is at least 9 m, and is a maximum of 12 m, above the level of a screen water vessel (18) in which the screen water arising in the paper making machine is collected.

18. A use of the deairing apparatus (5) according to any one of the preceding claims, characterised in that a possible surplus (14) of deaired suspension is admixed again with the stream of suspension (1) to be deaired:

19. A use of the deairing apparatus (5) according to claim 15, characterised in that the overflow (15) from the cleaner installation (9) is subjected to a crude deairing stage (16), and that after this crude deairing stage (16) the product (17) is mixed with screen water, fed to a second cleaner stage (19), purified there and comes into further use.

20. A use of the deairing apparatus (5) according to claim 19, characterised in that the accepts from the second cleaner stage (19) are recycled upstream of the first cleaner stage (9).

21. A use of the deairing apparatus (5) according to claim 19, characterised in that the product mixed with screen water is fed to a second deairing stage (25) which is coupled with the space (4), is deaired there and conveyed to the paper making machine.

22. A use of the deairing apparatus (5) according to any one of the preceding claims, characterised by the application for deairing of return water or screen water arising in the paper making machine and the utilisation of the suspension deaired in this manner for the sedimentation of fibres, solids and sludge in sedimentation cones.

## Revendications

1. Appareil de désaérage (5) destiné à désaérer une suspension de pâte à papier (1), dans lequel l'orientation de jets partiels (2) de la suspension contre une paroi de rebondissement (3) provoque dans une enceinte (4) soumise à une dépression,une pulvérisation de la suspension, l'air (24) ainsi séparé étant aspiré à l'extérieur de l'enceinte (4), comportant un réservoir (4') délimitant l'enceinte (4), dans lequel la suspension (1) à désaérer peut être introduite à travers des ouvertures (7) se trouvant dans un répartiteur, présentant des moyens augmentant la turbulence à la surface des jets partiels, une enceinte (4) se trouvant dans le répartiteur (6) pour la suspension (1) à désaérer et la suspension désaérée (12) pouvant être évacuée de l'appareil de désaérage (5), par une conduite et l'air (24) séparé par une autre conduite,
caractérisé
en ce que la totalité du courant (1) de la suspension est partagée par le répartiteur (6) en petits jets partiels (2) et en ce que comme répartiteur (6) on a recours à une plaque montée dans l'appareil de désaérage (5), qui contient les ouvertures (7) destinées à former les jets partiels (2), avec un flux volumique de 100 l/min au maximum chacun, et en ce qu'une goulotte de collecte (4''), destinée à recueillir et à évacuer la suspension (12) désaérée, est prévue à côté et, en hauteur, au-dessous de la plaque.

2. Appareil de désaérage (5) sel on la revendication 1, caractérise en ce que les ouvertures (7) présentent des portions de section transversale se rétrécissant dans le sens du courart.

3. Appareil de désaérage (5) selon la revendication 1, caractérisé en ce que les ouvertures (7) ont chacune la forme d'un diffuseur à gradins, en ce qu'elles présentent dans le sens du courant au moins un diamètre se rétrécissant par gradins.

4. Appareil de désaérage (5) selon la revendication 1 caractérisé en ce que les ouvertures (7) ont chacune la forme d'un diffuseur à gradins, en ce qu'elles présentent dans le sens du courant au moins un diamètre s'élargissant par gradins.

5. Appareil de désaérage (5) selon la revendication 1, caractérisé en ce que la turbulence est renforcée en ce que les ouvertures (7) sont des buses dites de turbulence, connues en soi.

6. Appareil de désaérage (5) sel on la revendication 1, caractérisé en ce que la turbulence est renforcée en ce que les ouvertures (7) présentent, sur leurs surfaces, des creux (21,22) en forme de rainures avec une composante de direction transversale au sens du courant.

7. Appareil de désaérage (5) selon la revendication 6, caractérisé en ce que les creux (21) produisent un moment cinétique en hélice dans la suspension passant devant ceux-ci.

8. Appareil de désaérage (5) selon la revendication 1, caractérisé en ce que la turbulence est renforcée en ce qu'au droit des sorties des ouvertures (7), des rainures sont pratiquées dans le répartiteur (6).

9. Appareil de désaérage (5) selon la revendication 1, caractérisé en ce que la suspension soumise aux jets individuels parvenant sur la paroi de rebondissement (3), est rapidement évacuée de cette zone, par exploitation de l'énergie cinétique qui lui est inhérente.

10. Appareil de désaérage (5) selon la revendication 1, caractérisé en ce que la vitesse des jets est comprise entre 10 et 12 m/s et le jet partiel (2) a un flux volumique compris entre 50 l/min et 80 l/min, pour une pression absolue de 0,5 à 0,8 bar.

11. Appareil de désaérage (5) selon la revendication 1, caractérisé en ce que la face supérieure de la plaque servant de répartiteur (6), présente des rainures ou des canaux (26) ouverts, pour l'évacuation rapide de la suspension dans la goulotte de collecte (4'').

12. Appareil de désaérage (5) selon la revendication 1, caractérisé en ce que les ouvertures (7) débouchent dans des prolongements (7'), au-delà de la face supérieure de la plaque servant de répartiteur (6).

13. Appareil de désaérage (5) selon la revendication 1, caractérisé en ce que la face supérieure de la plaque servant de répartiteur (6), présente une pente en direction ce la goulette de collecte (4'').

14. Appareil de désaérage (5) selon les revendications 1 et 9, caractérisé en ce que la paroi de rebondissement (3) du réservoir (4') a une forme et une inclinaison telles qu'elle guide de ce fait la suspension rebondissant en direction de la goulette de collecte (4'').

15. Utilisation de l'appareil de désaérage (5) selon la revendications 1, caractérisé en ce qu'il se produit une séparation des particules de substances gênantes contenues dans la suspension, dans une installation d'épuration (9) à partir de laquelle la pâte épurée (10) est envoyée vers l'appareil de désaérage, par une conduite de pâte épurée (11).

16. Utilisation de l'appareil de désaérage (5) selon la revendication 15, caractérisé en ce que la pâte épurée (10) sort de l'installation d'épuration (9) avec une pression comprise entre 1,4 et 1,8 bar et s'écoule, sous cette pression, par la conduite de pâte épurée (11), dans l'enceinte (8) située sous le répartiteur (6), dans laquelle est réglée une pression comprise entre 0,5 et 0,8 bar, un vide d'environ 0,05 bar étant maintenu dans l'enceinte (4) située au-dessus du répartiteur (6).

17. Utilisation de l'appareil de désaérage (5) selon l'une des revendication précédentes, caractérisée en ce que le niveau de l'eau dans l'aérateur (5) se situe à au moins 9 m, au maximum 12 m au-dessus du niveau d'un réservoir à eau de filtrage (18), dans lequel est recueillie l'eau de filtrage produite sur la machine à papier.

18. Utilisation de l'appareil de désaérage (5) selon l'une des revendications précédentes, caractérisée en ce qu'un éventuel excédent (14) de la suspension désaérée est à nouveau mélangé au courant de la suspension (1) à désaérer.

19. Utilisation de l'appareil de désaérage (5) selon la revendication 15, caractérisée en ce que le rejet (15) de l'installation d'épuration (9) est soumis à un désaérage grossier (16), et en ce que le produit (17) résultant de ce désaérage grossier (16), est mélangé à l'eau de filtrage, envoyé à une seconde étape d'épuration (19), y est épuré et réutilisé.

20. Utilisation de l'appareil de désaérage (5) selon la revendications 19, caractérisée en ce que la pâte épurée provenant de la seconde étape d'épuration (19) est renvoyée devant la première étape d'épuration (9).

21. Utilisation de l'appareil de désaérage (5) selon la revendication 19, caractérisée en ce que le produit mélangé à l'eau de filtrage est envoyé à une seconde étape de désaérage (25), qui est couplée à l'enceinte (4), y est désaéré et acheminé vers la machine à papier.

22. Utilisation de l'appareil de désaérage (5) selon l'un des revendications précédentes, caractérisée par une mise en oeuvre en vue du désaérage de l'eau de recyclage ou de l'eau de filtrage, produite sur la machine à papier, et utilisation de la suspension ainsi désaérée en vue de la sédimentation de fibres, de matières solides et de boues dans des cônes de sédimentation.

Fig. 1

Fig. 1A

Fig.2

Fig.3

Fig. 4

Fig. 5

Fig.6

Fig.7

Fig. 8

Fig. 9

Fig.10

Fig.11